(19) Europäisches Patentamt
European Patent Office
Office européen des brevets

(11) **EP 3 309 782 B1**

(12) **EUROPEAN PATENT SPECIFICATION**

(45) Date of publication and mention
of the grant of the patent:
**27.02.2019 Bulletin 2019/09**

(21) Application number: **16806709.8**

(22) Date of filing: **24.05.2016**

(51) Int Cl.:
*G10L 21/0208* (2013.01)    *H04R 3/00* (2006.01)
*G10L 21/0216* (2013.01)

(86) International application number:
**PCT/CN2016/083084**

(87) International publication number:
**WO 2016/197811 (15.12.2016 Gazette 2016/50)**

(54) **METHOD, DEVICE AND SYSTEM FOR NOISE SUPPRESSION**

VERFAHREN, VORRICHTUNG UND SYSTEM ZUR RAUSCHUNTERDRÜCKUNG

PROCÉDÉ, DISPOSITIF ET SYSTÈME PERMETTANT UNE SUPPRESSION DU BRUIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.06.2015 CN 201510312269**

(43) Date of publication of application:
**18.04.2018 Bulletin 2018/16**

(73) Proprietor: **GRG Banking Equipment Co., Ltd.**
**Guangzhou, Guangdong 510663 (CN)**

(72) Inventors:
• **DU, Gaofeng**
**Guangzhou City**
**Guangdong 510663 (CN)**
• **LIANG, Tiancai**
**Guangzhou City**
**Guangdong 510663 (CN)**
• **LIU, Jianping**
**Guangzhou City**
**Guangdong 510663 (CN)**
• **JIN, Xiaofeng**
**Guangzhou City**
**Guangdong 510663 (CN)**

(74) Representative: **Maiwald Patent- und
Rechtsanwaltsgesellschaft mbH
Elisenhof
Elisenstraße 3
80335 München (DE)**

(56) References cited:
**CN-A- 1 356 014      CN-A- 101 763 858
CN-A- 102 376 309    CN-A- 104 754 430
CN-A- 104 952 458    US-A1- 2013 132 076
US-B2- 8 675 896**

• **SIMON GODSILL ET AL: "Detection and
suppression of keyboard transient noise in audio
streams with auxiliary keybed microphone", 2015
IEEE INTERNATIONAL CONFERENCE ON
ACOUSTICS, SPEECH AND SIGNAL
PROCESSING (ICASSP), 1 April 2015
(2015-04-01), pages 379-383, XP55338723, DOI:
10.1109/ICASSP.2015.7177995 ISBN:
978-1-4673-6997-8**

## Description

The application claims the priority to Chinese Patent Application No. 201510312269.8, titled "METHOD, DEVICE AND SYSTEM FOR NOISE SUPPRESSION", filed on June 9, 2015 with the State Intellectual Property Office of the People's Republic of China.

## TECHNICAL FIELD

The present disclosure relates to the technology of voice signal processing, and in particular to a noise suppressing method, a noise suppressing device and a noise suppressing system.

## BACKGROUND

Devices with a voice interaction function normally include many mechanical components, which produce a large amount of rapidly changing non-steady machine noise and impact noise during operation. The noise enters into a system through a pickup on the device, which seriously affects the voice interaction. The traditional method for suppressing noise based on noise power spectrum estimation has a poor effect on filtering the large amount of rapidly changing non-steady machine noise and impact noise. In the conventional technology, a dual-microphone noise suppressing device is often used for filtering ambient noise. The device includes a primary microphone for receiving ambient noise and voice, and a reference microphone for receiving ambient noise. Then noise is suppressed using the two signals by a known active noise cancellation (ANC) method. However, the ANC method requires that the noise is received by the primary microphone and the reference microphone from substantially the same sound field, so that noise signals received by the primary microphone and the reference microphone are in a highly linear relation. In this condition, the ANC method works properly, while if this condition is not met, the dual-microphone noise suppressing method often does not work properly. In fact, a device often has a relatively closed housing. The noise reference microphone is installed in the housing to receive machine noise, while the main microphone is generally installed in the external or at an opening on the housing in order to receive a voice. In this case, the sound fields of the reference microphone and the main microphone is quite different, resulting in a poor performance or fails of the ANC method.

Therefore, it is desired to solve the above technical problem of poor performance of the ANC method due to the great difference between the sound fields of the reference microphone and the primary microphone. It is known according to the patent application US2013/0132076A1 a keyboard click noise reduction scheme using a smart model selector and adaptive filtering.

It is known according to the publication S.Godsill, H. Buchner, J. Skoglund "DETECTION AND SUPPRESSION OF KEYBOARD TRANSIENT NOISE IN AUDIO STREAMS WITH AUXILIARY KEYBED MICROPHONE", proceedings of ICASSP 2015, pages 379-383, an algorithm using a keybed microphone as reference signal. A short-time transform data is sequentially processed in short frames and a robust statistical mode is formulated and estimated using Bayesian inference procedures.

## SUMMARY

A method, a device and a noise suppressing system are provided according to embodiments of the present disclosure, to solve the technical problem of poor performance of the ANC method due to the great difference between the sound fields of the reference microphone and the primary microphone.

A noise suppressing method is provided according to an embodiment of the present disclosure, which includes:

S1, receiving, by a noise suppressing device, internal noise acquired by a reference voice acquisition mechanism and a voice signal containing external noise acquired by a primary voice acquisition mechanism, when the voice signal is inputted;
S2, extracting an internal signal feature corresponding to the internal noise, where the internal signal feature is a power spectrum frame sequence;
S3, acquiring an external approximate feature corresponding to the external noise based on the internal signal feature and a pre-set mapping formula, where the external approximate feature is a sequence of frames in a power spectrum form;
S4, converting the external approximate feature into a noise signal estimate by the inverse Fourier transform; and
S5, performing a pre-set noise cancellation process on the noise signal estimate and the acquired voice signal containing the external noise, to obtain a noise-suppressed de-noised voice signal.

Preferably, before step S1, the method further includes:
training, under a condition that no voice signal is inputted, a preset auto-encoding neural network structure with noise signal samples composed of the internal noise and the external noise, to determine the mapping formula.
Preferably, the training a auto-encoding neural network structure includes:

S6, performing the Fourier transform on each preset frame of each of noise signal samples, to obtain a feature and sample angle information of the sample frame, where the feature of the sample frame is in a power spectral form;

S7, determining a training sample $\operatorname{set}\left(x(n), o(n)\right)_{n=1}^{M}$ by taking the feature of the sample frame as a sample input $x(n)$ and an expected output $o(n)$ of the preset auto-encoding neural network structure;

S8, performing the training with each training sample in the training sample $\operatorname{set}\left(x(n), o(n)\right)_{n=1}^{M}$, to determine a weight vector and an offset parameter corresponding to the training sample $\operatorname{set}\left(x(n), o(n)\right)_{n=1}^{M}$; and

S9, adding the determined weight vector and the determined offset parameter into the preset auto-encoding neural network structure, to obtain the mapping formula of the training sample $\operatorname{set}\left(x(n), o(n)\right)_{n=1}^{M}$.

Preferably, step S5 specifically includes:
performing an ANC noise cancellation process on the noise signal estimate and the acquired voice signal containing the internal noise, to obtain the noise-suppressed de-noised voice signal.

Preferably, the preset auto-encoding neural network structure is a 5-layer structure, a first layer and a fifth layer are input and output layers, and a second layer, a third layer and a fourth layer are hidden layers.

A noise suppressing device is provided according to an embodiment of the present disclosure, which includes:

a receiving unit, configured to receive internal noise acquired by a reference voice acquisition mechanism and a voice signal containing external noise acquired by a primary voice acquisition mechanism, when the voice signal is inputted;
an extracting unit, configured to extract an internal signal feature corresponding to the internal noise, where the internal signal feature is a power spectrum frame sequence;
an acquiring unit, configured to acquire an external approximate feature corresponding to the external noise based on the internal signal feature and a preset mapping formula, where the external approximate feature is a sequence of frames in a power spectrum form;
a converting unit, configured to convert the external approximate feature into a noise signal estimate by the inverse Fourier transform; and
a de-noising unit, configured to perform a pre-set noise cancellation process on the noise signal estimate and the acquired voice signal containing the external noise, to obtain a noise-suppressed de-noised voice signal.

Preferably, the noise suppressing device further includes:
a training unit, configured to train, under a condition that no voice signal is inputted, a preset auto-encoding neural network structure with noise signal samples composed of the internal noise and the external noise, to determine the mapping formula.

Preferably, the training unit specifically includes:

a converting subunit, configured to perform, under a condition that no voice signal is inputted, the Fourier transform on each pre-set frame of each of noise signal samples, to obtain a feature and sample angle information of the sample frame, where the feature of the sample frame is in a power spectral form;
a first determining subunit, configured to determine a training sample $\operatorname{set}\left(x(n), o(n)\right)_{n=1}^{M}$ by taking the feature of the sample frame as a sample input $x(n)$ and an expected output $o(n)$ of the preset auto-encoding neural network structure;
a second determining subunit, configured to perform the training with each training sample in the training sample $\operatorname{set}\left(x(n), o(n)\right)_{n=1}^{M}$, to determine a weight vector and an offset parameter corresponding to the training sample $\operatorname{set}\left(x(n), o(n)\right)_{n=1}^{M}$; and
a calculating subunit, configured to adding the determined weight vector and the determined offset parameter into the preset auto-encoding neural network structure, to obtain the mapping formula of the training sample $\operatorname{set}\left(x(n), o(n)\right)_{n=1}^{M}$.

A noise suppressing system is provided according to an embodiment of the present disclosure, which includes:
a reference voice acquisition mechanism, a primary voice acquisition mechanism and the noise suppressing device according to any embodiments of the present disclosure.

The reference voice acquisition mechanism and the primary voice acquisition mechanism respectively are in signal transmission connection with the noise suppressing device.

The reference voice acquisition mechanism is configured to acquire an internal noise signal.

The noise suppressing device is configured to receive internal noise and a voice signal containing external noise when the voice signal is inputted, extract an internal signal feature corresponding to the internal noise, acquire an external approximate feature corresponding to the external noise based on the internal signal feature and a pre-set mapping formula, convert the external approximate feature into a noise signal estimate by the inverse Fourier transform, and perform a pre-set noise cancellation process on the noise signal estimate and the acquired voice signal containing the internal noise, to obtain a noise-suppressed de-noised voice signal.

The primary voice acquisition mechanism is configured to acquire the voice signal containing the internal noise.

The internal signal feature is a power spectrum frame sequence, and the external approximate feature is a sequence of frames in a power spectrum form.

Preferably, the primary voice acquisition mechanism is further configured to acquire the external noise under a condition that no voice signal is inputted, so that the noise suppressing device trains, under a condition that no voice signal is inputted, a preset auto-encoding neural network structure with noise signal samples composed of the internal noise and the external noise, to determine the mapping formula.

As can be seen from the above technical solution, the embodiments of the present disclosure have the following advantages.

A method, a device and a noise suppressing system are provided according to embodiments of the present disclosure. The noise suppressing method includes: S1, receiving, by the noise suppressing device, internal noise acquired by a reference voice acquisition mechanism and a voice signal containing external noise acquired by a primary voice acquisition mechanism, when the voice signal is inputted; S2, extracting an internal signal feature corresponding to the internal noise, where the internal signal feature is a power spectrum frame sequence; S3, acquiring an external approximate feature corresponding to the external noise based on the internal signal feature and a pre-set mapping formula, where the external approximate feature is a sequence of frames in a power spectrum form; S4, converting the external approximate feature into a noise signal estimate by the inverse Fourier transform; and S5, performing a pre-set noise cancellation process on the noise signal estimate and the acquired voice signal containing the internal noise, to obtain a noise-suppressed de-noised voice signal. In the embodiments, the internal signal feature corresponding to the internal noise is extracted, the external approximate feature corresponding to the external noise is acquired based on the internal signal feature and the pre-set mapping formula, the external approximate feature is converted into a noise signal estimate, and the noise cancellation process is performed using the noise signal estimate and the voice signal, thereby avoiding the restriction of great difference between external sound fields, and solving the technical problem of poor performance of the ANC method due to the great difference between the sound fields of the reference microphone and the primary microphone.

## BRIEF DESCRIPTION OF THE DRAWINGS

The accompanying drawings for the description of the embodiments or the conventional technology are described briefly as follows, so that the technical solutions according to the embodiments in the present disclosure or the conventional technology become clearer. It is apparent that the accompanying drawings in the following description are only some embodiments of the present disclosure. For those skilled in the art, other accompanying drawings may be obtained according to these accompanying drawings without any creative work.

Figure 1 is a flow chart of a noise suppressing method according to an embodiment of the present disclosure;

Figure 2 is a flow chart of a noise suppressing method according to another embodiment of the present disclosure;

Figure 3 is a schematic structural diagram of a noise suppressing device according to an embodiment of the present disclosure;

Figure 4 is a schematic structural diagram of a noise suppressing device according to another embodiment of the present disclosure;

Figure 5 is a schematic structural diagram of a noise suppressing system according to an embodiment of the present disclosure; and

Figure 6 is a schematic diagram of auto-coded neural network connection of a noise suppressing system according to an embodiment of the present disclosure.

## DETAILED DESCRIPTION OF THE EMBODIMENTS

A noise suppressing method, a noise suppressing device and a noise suppressing system are provided according to embodiments of the present disclosure, to solve the technical problem of poor performance of the ANC method due to the great difference between the sound fields of the reference microphone and the primary microphone.

The technical solution according to the embodiments of the present disclosure will be described clearly and completely as follows in conjunction with the accompany drawings in the embodiments of the present disclosure, so that purposes, characteristics and advantages of the present disclosure can be more clear and understandable. It is obvious that the described embodiments are only a part of the embodiments according to the present disclosure. All the other embodiments obtained by those skilled in the art based on the embodiments in the present disclosure without any creative work belong to the scope of the present disclosure.

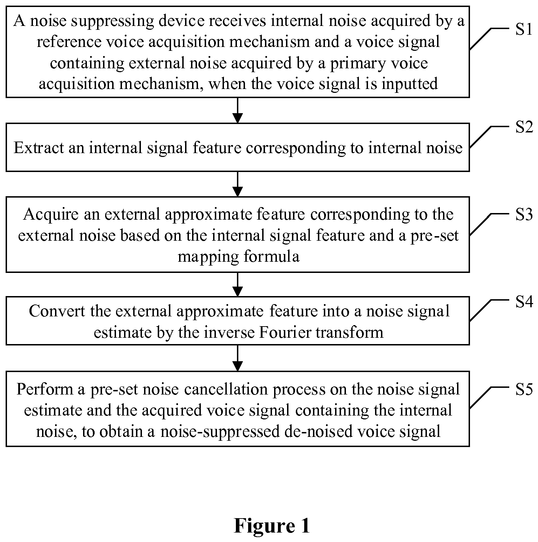

Referring to Figure 1, a noise suppressing method according to an embodiment of the present disclosure includes steps S1 to S5.

In step S1, when a voice signal is inputted, a noise suppressing device receives internal noise acquired by a reference voice acquisition mechanism and the voice signal containing external noise acquired by a primary voice acquisition mechanism.

When it is required to de-noise the voice signal, the noise suppressing device receives the internal noise acquired by the reference voice acquisition mechanism and the voice signal containing the external noise acquired by the primary voice acquisition mechanism when the voice signal is inputted.

In step S2, an internal signal feature corresponding to the internal noise is extracted.

After receiving the internal noise acquired by the reference voice acquisition mechanism and the voice signal containing the external noise acquired by the primary voice acquisition mechanism, the noise suppressing device extracts the internal signal feature corresponding to the internal noise. The internal signal feature is a power frame spectrum sequence.

In step S3, based on the internal signal feature and a pre-set mapping formula, an external approximate feature corresponding to the external noise is acquired.

After the internal signal feature corresponding to the internal noise is extracted, the external approximate feature corresponding to the external noise is acquired based on the internal signal feature and the pre-set mapping formula. The external approximate feature is a sequence of frames in a power spectrum form.

In step S4, the external approximate feature is converted into a noise signal estimate by the inverse Fourier transform.

After the external approximate feature corresponding to the external noise is acquired based on the internal signal feature and the pre-set mapping formula, the external approximate feature is converted into the corresponding noise signal estimate by the inverse Fourier transform.

In step S5, a pre-set noise cancellation process is performed on the noise signal estimate and the acquired voice signal containing the internal noise, to obtain a noise-suppressed de-noised voice signal.

After the external approximate feature is converted into the corresponding noise signal estimate by the inverse Fourier transform, the pre-set noise cancellation process is performed on the noise signal estimate and the acquired voice signal containing the internal noise, to obtain the noise-suppressed de-noised voice signal.

In the embodiment, the internal signal feature corresponding to the internal noise is extracted, the external approximate feature corresponding to the external noise is acquired based on the internal signal feature and the pre-set mapping formula, the external approximate feature is converted into the noise signal estimate, and the noise cancellation process is performed with the noise signal estimate and the voice signal, thereby avoiding the restriction of great difference between external sound fields, and solving the technical problem of poor performance of the ANC method due to the great difference between the sound fields of the reference microphone and the primary microphone.

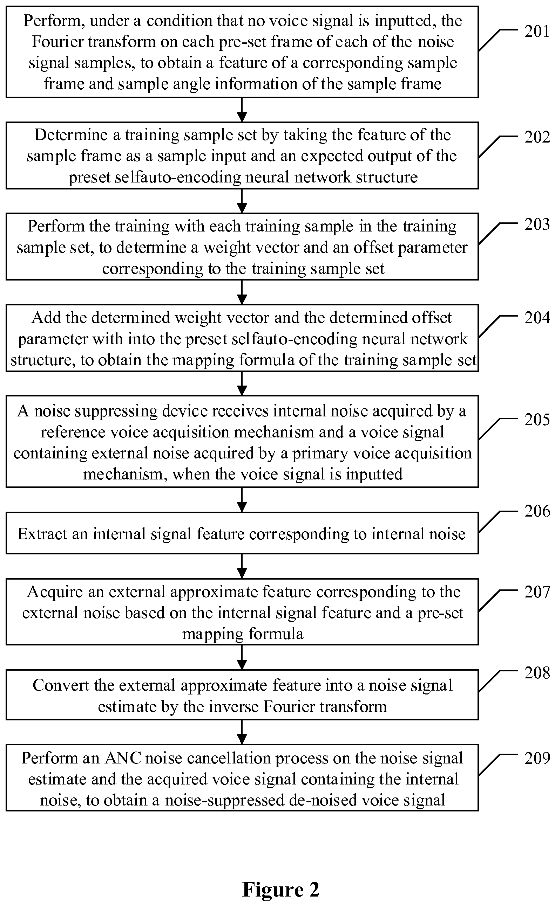

The noise suppressing method is described above in detail, and the training of the auto-encoding neural network structure is described below in detail. Referring to Figure 2, a noise suppressing method according to another embodiment of the present disclosure includes steps 201 to 209.

In step 201, under a condition that no voice signal is inputted, the Fourier transform is performed on each pre-set frames of an acquired noise signal sample, to obtain a feature and sample angle information of the sample frame.

Before de-noising a voice signal, a preset auto-encoding neural network structure is trained with noise signal samples composed of internal noise and external noise under a condition that no voice signal is inputted, to determine a mapping formula. The above-described preset auto-encoding neural network structure may be obtained by performing the Fourier transform on each pre-set frame of the acquired noise signal sample under a condition that no voice signal is inputted, to obtain the feature of the corresponding sample frame and the sample angle information.

For example, before receiving a voice signal, both the reference voice acquisition mechanism (such as a reference microphone) and the primary voice acquisition mechanism (such as a primary microphone) collect internal machine noise and machine noise leaked to the external respectively for more than 100 hours, to form the noise signal samples. The device may be equipped with a noise suppressing device, such as a remote smart teller. The acquired noise signal samples are sampled at the frequency of 8kHz, then a windowing process is performed on the noise signal samples with a Hamming window of 32ms, to obtain a sequence of frames. Each of the frames has 256 sampling points. Then the Fourier transform is performed on each of frames of the noise signal samples. A power spectrum $S(\omega)$ and an angle $angle(\omega)$ of the noise signal sample are obtained by getting the square of the transformed Fourier coefficients. The power spectrum $S(\omega)$ is used as an internal feature, and the angle $angle(\omega)$ is used for converting the internal feature back to the signal.

In step 202, by taking the feature of the sample frame as a sample input $x(n)$ and an expected output $o(n)$ of the auto-encoding neural network structure, a training sample set $\left(x(n), o(n)\right)_{n=1}^{M}$ is determined.

After the Fourier transform is performed on each pre-set frame of the acquired noise signal sample to obtain the feature of the corresponding sample frame and the sample angle information, a training sample set $\left(x(n), o(n)\right)_{n=1}^{M}$ is determined by taking the feature of the sample frame as a sample input $x(n)$ and an expected output $o(n)$ of the preset auto-encoding neural network structure. For example, 5 successive frames of the logarithmic power spectrum $S(\omega)$ of each internal feature of the noise signals received by the reference microphone and the main microphone are taken as the internal feature of the voice signal and as an input and an expected output of the auto-encoding neural network, and all the 5-frame signal features extracted from the primary microphone signals and the reference microphone signals constitute a training sample set $\left(x(n), o(n)\right)_{n=1}^{M}$, which is used in step 203.

In step 203, the training is performed with each training sample in the training sample $\mathrm{set}\left(x(n), o(n)\right)_{n=1}^{M}$, to determine a weight vector and an offset parameter corresponding to the training sample $\mathrm{set}\left(x(n), o(n)\right)_{n=1}^{M}$.

After the training sample set $\left(x(n), o(n)\right)_{n=1}^{M}$ is determined by taking the feature of the sample frame as the sample input $x(n)$ and the expected output $o(n)$ of the preset auto-encoding neural network structure, the training is performed with each training sample in the training sample $\mathrm{set}\left(x(n), o(n)\right)_{n=1}^{M}$, to determine the weight vector and the offset parameter corresponding to the training sample $\mathrm{set}\left(x(n), o(n)\right)_{n=1}^{M}$.

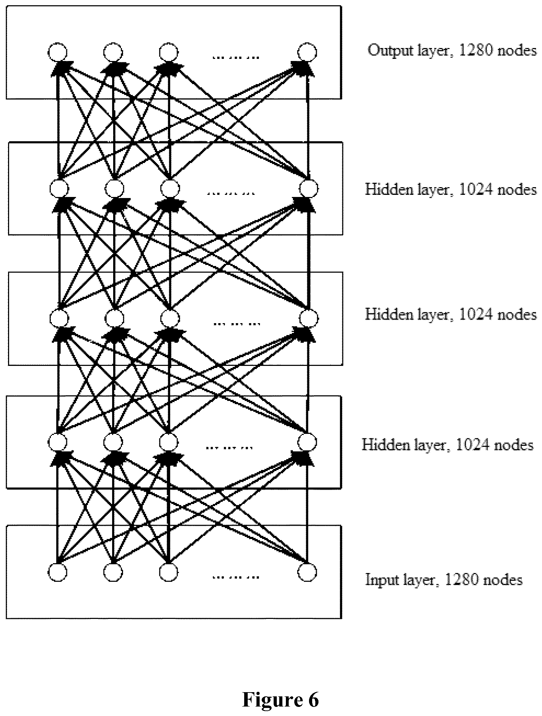

For example, the preset auto-encoding neural network structure is a 5-layer structure. A first layer and a fifth layer are input and output layers, each having 1280 nodes, which is the number of dimensions of the 5 frame signal feature. A second layer, a third layer and a fourth layer are hidden layers, each having 1024 nodes. A larger number of hidden layers and a larger number of nodes lead to more accurate mapping of the network, while also lead to a larger amount of computation and a larger number of required samples. It should be noted that, the number of hidden layers and the number of nodes per layer are determined by making a trade-off. The network is a fully connected network. $x(n)$ is used as a network input, and $o(n)$ is used as a expected network output. It is noted that the above neural network structure may be as shown in Figure 6.

For a $n^{th}$ training sample, an input is a vector $x(n)$, an expected output is $o(n)$, and a neuron output vector of the input layer is.

A final result of the training is to calculate a weight $w_l, l = 2,3,4,5$ and an offset parameter $b_l, l = 2,3,4,5$ of the auto-coding neural network based on the input and expected output sample set $\left(x(n), o(n)\right)_{n=1}^{M}$.

The network training process is described as follows.

A) An initial weight value $w_l, l = 2,3,4,5$ is randomly selected according to the auto-coded neural network structure, and the offset value $b_l, l = 2,3,4,5$ is set to zero. A first sample in the training sample set is taken, where n=1.

B) According to a formula $y_1(n) = x(n)$, the input vector $x(n)$ is mapped to the neuron output vector $y_1(n)$ of the input layer.

C) According to a mapping relation calculation formula, a neuron output vector of the input layer is mapped to a neuron output vector of a first hidden layer, the neuron output vector of the first hidden layer is mapped to a neuron output vector of a second hidden layer, the neuron output vector of the second hidden layer is mapped to a neuron output vector of a third hidden layer, and the neuron output vector of the third hidden layer is mapped to a neuron output vector of the output layer.

The mapping relation calculation formula is expressed as:

$$y_1(n) = \sigma\left(u_l(n)\right),$$

$$u_1(n) = w_l y_{l-1}(n) + b_l, l = 2,3,4,5.$$

Where, $\sigma(n) = \dfrac{1}{1 + e^{-x}}$, e is a base of a natural logarithm, $w_1$ is a weight vector of a first layer, $b_1$ is an offset coefficient. When $l$=2, the formula is used for mapping the neuron output vector of the input layer into a neuron output vector of a first hidden layer. When $l$=3,4, the formulas are used for mapping the neuron output vector of the first hidden layer into the neuron output vector of the second hidden layer, and mapping the neuron output vector of the second hidden layer into the neuron output vector of the third hidden layer. When $l$=5, the formula is used for mapping the neuron output vector of the third hidden layer into the neuron output vector of the output layer.

D) According to a vector of the output layer and the expected output vector o(n), an error function (which is a function for measuring accuracy of outputs of the network) is calculated with a formula $E(n) = 0.5 \times \left\| y_5(n) - o(n) \right\|_2^2$.

E) According to a derivative calculation formula, derivatives of the error function with respect to the weight and offset of each layer are calculated.

The derivative calculation formula is:

$$\frac{\partial E}{\partial w_l} = x^{l-1}\left(\delta^l\right)^T,$$

$$\frac{\partial E}{\partial w_l} = \delta^l, l = 5,4,3,2 .$$

For the hidden layer, we have $\delta^l = (w_{l+1})^T \cdot \delta^{l+1} \cdot \sigma'(u_l)$, $l = 2,3,4$ , and for the output layer, we have l=5, $\delta^5 = \sigma'(u_5) \cdot (y_5(n) - o(n))$.

F) Based on the derivatives of the error function with respect to the weight and offset of each layer, new weights and offsets are calculated with the calculation formula as:

$$w_1^{new} = w_l + \Delta w_l ,$$

$$b_1^{new} = b_l + \Delta b_l, l = 5,4,3,2 .$$

$$\Delta w_l = -\eta \frac{\partial E}{\partial w_l} ,$$

In the calculation formula, $\Delta b_l = -\eta \frac{\partial E}{\partial b_l}$, l=5,4,3,2 are variations of the weights and offsets, and $\eta$ is a learning rate. A large $\eta$ leads to oscillation of the new weights and offsets, while a small $\eta$ leads to a slow learning. According to the present disclosure, $\eta = 0.05$ is determined by making a trade-off.

G) The new weights and offsets are set as the weights and offsets of the auto-coding neural network, which are expressed as follows:

$$w_l = w_1^{new}, l = 2,3,4,5 ,$$

$$b_l = b_1^{new}, l = 2,3,4,5 .$$

H) If the variation of each weight vector and each offset parameter ($\Delta w_l, l = 2,3,4,5$, $\Delta b_l, l = 2,3,4,5$, see the calculation formulas in F) is less than a given threshold Th, the training ends. Otherwise, a next sample is taken, i.e., n=n+1, and the process turns to step 202, to perform to the next round of training. A large threshold Th leads to inadequate training, while a small threshold Th leads to a long time of training. In the present disclosure, Th=0.001 is determined by making a trade-off.

In step 204, the determined weight vector and the determined offset parameter are added into the preset auto-encoding neural network structure, to obtain the mapping formula of the training sample set $\left(x(n), o(n)\right)_{n=1}^{M}$ .

After the training is performed with each training sample in the training sample set $\left(x(n), o(n)\right)_{n=1}^{M}$ to determine the weight vector and the offset parameter corresponding to the training sample set $\left(x(n), o(n)\right)_{n=1}^{M}$, the determined weight vector and the determined offset parameter are added into the preset auto-encoding neural network structure, to obtain the mapping formula of the training sample set $\left(x(n), o(n)\right)_{n=1}^{M}$ .

A result of adding the weight and the offset data into the neural network structure is the mapping relationship between the internal noise signal feature and the external noise signal feature. The mapping formula is expressed as: $o = \sigma(w_5\sigma(w_4\sigma(w_3\sigma(w_2 x + b_2) + b_3) + b_4) + b_5)$.

In step 205, when the voice signal is inputted, a noise suppressing device receives internal noise acquired by a reference voice acquisition mechanism and a voice signal containing external noise acquired by a primary voice acquisition mechanism.

When the voice signal is inputted, the noise suppressing device receives the internal noise acquired by the reference voice acquisition mechanism and the voice signal containing external noise acquired by the primary voice acquisition mechanism.

It is to be noted that, when the above device operates, the reference microphone acquires the internal mechanical noise, and the main microphone acquires the voice signal containing the mechanical noise. According to step 202, a feature is extracted from the noise signal acquired by the reference microphone, to obtain the information of power spectrum frame sequence and angle sequence.

In step 206, an internal signal feature corresponding to the internal noise is extracted.

After receiving the internal noise acquired by the reference voice acquisition mechanism and the voice signal containing the external noise acquired by the primary voice acquisition mechanism, the noise suppressing device extracts the internal signal feature corresponding to the internal noise. The internal signal feature is a power spectrum frame sequence.

For example, an internal feature of successive 5 frame signal is inputted to the trained auto-encoding neural network. According to the mapping formula obtained in step 203, the network output is the external approximation feature of the noise signal received by the main microphone.

In step 207, based on the internal signal feature and a pre-set mapping formula, an external approximate feature corresponding to the external noise is acquired.

After the internal signal feature corresponding to the internal noise is extracted, the external approximate feature corresponding to the external noise is acquired based on the internal signal feature and the pre-set mapping formula. The external approximate feature is a sequence of frames in a power spectrum form.

For example, the inverse Fourier transform is performed on the auto-encoding neural network output noise signal estimation with the corresponding frame angle, to obtain the estimated noise signal $\hat{x}(n)$.

In step 208, the external approximate feature is converted into a noise signal estimate by the inverse Fourier transform.

After the external approximate feature corresponding to the external noise is acquired based on the internal signal feature and the pre-set mapping formula, the external approximate feature is converted into the corresponding noise signal estimate by the inverse Fourier transform.

In step 209, the ANC noise cancellation process is performed on the noise signal estimate and the acquired voice signal containing the internal noise, to obtain a noise-suppressed de-noised voice signal.

After the external approximate feature is converted into the corresponding noise signal estimate by the inverse Fourier transform, the ANC noise cancellation process is performed on the noise signal estimate and the acquired voice signal containing the internal noise, to obtain the noise-suppressed de-noised voice signal.

The above ANC noise cancellation processing is described as follows.

A vector composed of noise signal estimate at the first m time points received by a primary microphone at time n is denoted as $X = (\hat{x}(n),\hat{x}(n\text{-}1),...,\hat{x}(n\text{-}m))^T$, a voice signal containing mechanical noise collected by the primary microphone at time n is denoted as $d(n)$, and $W = (w(1),w(2),\cdots,w(m))^T$ is a weighting coefficient of a filter, where T represents a transposition of a vector. A large m leads to a large amount of computation, while a small m leads to a poor effect of noise suppression. In the embodiment, m=32.

a) An initial weight value $W$ of weighting coefficient of the filter is selected at random at an initial time n=1.

b) Based on a formula $\hat{s}(n) = d(n)\text{-}W^TX$, the noise-suppressed voice signal $\hat{s}(n)$ for the time n is calculated.

c) Based on a formula $W^{new} = W + 2\mu(d(n)\text{-}W^TX)X$, a new weighting coefficient $W^{new}$ of the filter is calculated. A parameter $\mu$ is a learning factor of the weighting coefficient. A large or small $\mu$ will leads to a poor effect of noise suppression. In the embodiment, $\mu = 0.05$ .

d) The new weighting coefficient $W^{new}$ is set as the weighting coefficient of the filter, that is, $W = W^{new}$.

e) A noise signal estimate and a voice signal containing mechanical noise at the next time point are taken, where n=n+1, and the process turns to step b).

The $\hat{s}(n)$ is calculated for each time point using the ANC method, to serve as a noise-suppressed voice signal outputted by the ANC method for the time point.

In the embodiment, the internal signal feature corresponding to the internal noise is extracted, the external approximate feature corresponding to the external noise is acquired based on the internal signal feature and the pre-set mapping formula, the external approximate feature is converted into the noise signal estimate, and the noise cancellation process is performed on the noise signal estimate and the voice signal, thereby avoiding the restriction of great difference between external sound fields, and solving the technical problem of poor performance of the ANC method due to the great difference between the sound fields of the reference microphone and the primary microphone. Furthermore, the combination of neural network and the ANC method greatly improves the de-noising effect of the voice signal.

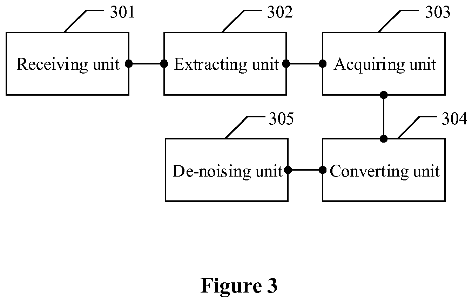

Referring to Figure 3, a noise suppressing device provided according to an embodiment of the present disclosure includes: a receiving unit 301, an extracting unit 302, an acquiring unit 303, a converting unit 304 and a de-noising unit 305.

The receiving unit 301 is configured to receive internal noise acquired by a reference voice acquisition mechanism and a voice signal containing external noise acquired by a primary voice acquisition mechanism, when the voice signal is inputted.

The extracting unit 302 is configured to extract an internal signal feature corresponding to the internal noise. And the internal signal feature is a power spectrum frame sequence.

The acquiring unit 303 is configured to acquire an external approximate feature corresponding to the external noise based on the internal signal feature and a pre-set mapping formula. And the external approximate feature is a sequence of frames in a power spectrum form.

The converting unit 304 is configured to convert the external approximate feature into a noise signal estimate by the inverse Fourier transform.

The de-noising unit 305 is configured to perform a pre-set noise cancellation process on the noise signal estimate and the acquired voice signal containing the internal noise, to obtain a noise-suppressed de-noised voice signal.

In the embodiment, the extracting unit 302 extracts the internal signal feature corresponding to the internal noise, the acquiring unit 303 acquires the external approximate feature corresponding to the external noise based on the internal signal feature and the pre-set mapping formula, and the de-noising unit 305 performs the noise cancellation process on the voice signal and the noise signal estimate converted from the external approximate feature, thereby avoiding the restriction of great difference between external sound fields, and solving the technical problem of poor performance of the ANC method due to the great difference between the sound fields of the reference microphone and the primary microphone.

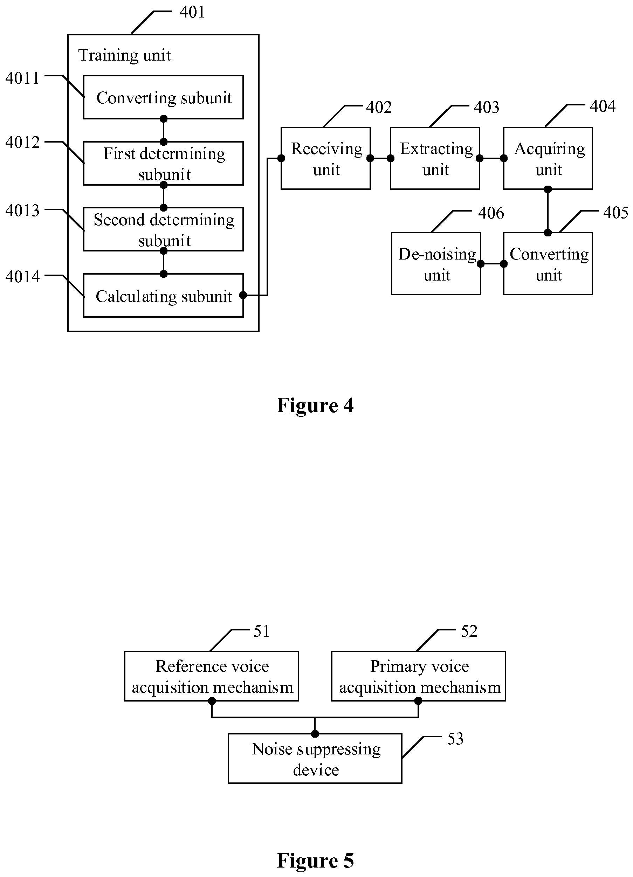

Units of the noise suppressing device are described above in detail, and additional units will be described in detail below. Referring to Figure 4, the noise suppressing device according to another embodiment of the present disclosure includes: a training unit 401, a receiving unit 402, an extracting unit 403, an acquiring unit 404, a converting unit 405 and a de-noising unit 406.

The training unit 401 is configured to train, under a condition that no voice signal is inputted, a preset auto-encoding neural network structure with noise signal samples composed of the internal noise and the external noise, to determine the mapping formula.

The training unit 401 includes: a converting subunit 4011, a first determining subunit 4012, a second determining subunit 4013, and a calculating subunit 4014.

The converting subunit 4011 is configured to perform, under a condition that no voice signal is inputted, the Fourier transform on each pre-set frame of each of noise signal samples, to obtain a feature and sample angle information of the sample frame. The feature of the sample frame is in a power spectral form.

The first determining subunit 4012 is configured to determine a training sample $\mathrm{set}\left(x(n), o(n)\right)_{n=1}^{M}$ by taking the feature of the sample frame as a sample input $x(n)$ and an expected output $o(n)$ of the preset auto-encoding neural network structure.

The second determining subunit 4013 is configured to perform the training with each training sample in the training sample $\mathrm{set}\left(x(n), o(n)\right)_{n=1}^{M}$, to determine a weight vector and an offset parameter corresponding to the training sample $\mathrm{set}\left(x(n), o(n)\right)_{n=1}^{M}$.

The calculating subunit 4014 is configured to add the determined weight vector and the determined offset parameter into the preset auto-encoding neural network structure, to obtain the mapping formula of the training sample $\mathrm{set}\left(x(n), o(n)\right)_{n=1}^{M}$.

The receiving unit 402 is configured to receive internal noise acquired by a reference voice acquisition mechanism and a voice signal containing external noise acquired by a primary voice acquisition mechanism, when the voice signal is inputted.

The extracting unit 403 is configured to extract an internal signal feature corresponding to the internal noise. The internal signal feature is a power spectrum frame sequence.

The acquiring unit 404 is configured to acquire an external approximate feature corresponding to the external noise based on the internal signal feature and a pre-set mapping formula. The external approximate feature is a sequence of frames in a power spectrum form.

The converting unit 405 is configured to convert the external approximate feature into a noise signal estimate by the inverse Fourier transform.

The de-noising unit 406 is configured to perform a pre-set noise cancellation process on the noise signal estimate and the acquired voice signal containing the internal noise, to obtain a noise-suppressed de-noised voice signal.

In the embodiment, the extracting unit 403 extracts the internal signal feature corresponding to the internal noise, the acquiring unit 404 acquires the external approximate feature corresponding to the external noise based on the internal signal feature and the pre-set mapping formula, and the external approximate feature is converted into a noise signal estimate, and the de-noising unit 406 performs the noise cancellation process with the voice signal and the estimated noise signal converted from the external approximate feature, thereby avoiding the restriction of great difference between external sound fields, and solving the technical problem of poor performance of the ANC method due to the great difference between the sound fields of the reference microphone and the primary microphone. Furthermore, the combination of neural network and the ANC method greatly improves the de-noising effect of the voice signal.

Referring to Figure 5, a noise suppressing system according to an embodiment of the present disclosure includes: a reference voice acquisition mechanism 51, a primary voice acquisition mechanism 52 and the noise suppressing device 53 in the embodiments as shown in Figure 3 and Figure 4.

The reference voice acquisition mechanism 51 and the primary voice acquisition mechanism 52 are in signal transmission connection with the noise suppressing device 53.

The reference voice acquisition mechanism 51 is configured to acquire an internal noise signal, such as an internal noise signal of a remote smart teller.

The noise suppressing device 53 is configured to receive internal noise and a voice signal containing external noise when the voice signal is inputted, extract an internal signal feature corresponding to the internal noise, acquire an external approximate feature corresponding to the external noise based on the internal signal feature and a pre-set mapping formula, convert the external approximate feature into a noise signal estimate by the inverse Fourier transform, and perform a pre-set noise cancellation process on the noise signal estimate and the acquired voice signal containing the internal noise, to obtain a noise-suppressed de-noised voice signal.

The primary voice acquisition mechanism 52 is configured to acquire the voice signal containing the internal noise. The primary voice acquisition mechanism 52 is further configured to acquire the external noise under a condition that no voice signal is inputted, so that the noise suppressing device 53 trains, under a condition that no voice signal is inputted, a preset auto-encoding neural network structure with noise signal samples composed of the internal noise and the external noise, to determine the mapping formula.

The internal signal feature is a power spectrum frame sequence, and the external approximate feature is a sequence of frames in a power spectrum form.

Further, the reference voice acquisition mechanism 51 and the primary voice acquisition mechanism 52 may be microphones, which is not limited herein.

It is to be known clearly by those skilled in the art that, for convenient and clear description, for specific operation of the above system, device and unit, reference may be made to the corresponding process in the above method embodiment, which is not repeated here.

In the embodiments mentioned in the disclosure, it is to be understood that, the disclosed system, device and method may be implemented in other ways. For example, the above device embodiment is only illustrative. For example, the division of the units is only a logical functional division. In practice, there may be other divisions. For example, multiple units or assembles may be combined or may be integrated into another system. Alternatively, some features may be neglected or not be performed. The displayed or discussed mutual coupling or direct coupling or communication connection may be an indirect coupling or communication connection via some interfaces, devices or units, which may be in an electrical, mechanical or other form.

The units described as separate components may be or may not be separate physical units, and a component which is displayed as a unit may be or may not be a physical unit, that is, may be located at a same position, or may be distributed over multiple network units. Some or all of the units may be selected as required to implement the solution of the embodiment.

Further, the functional units in the embodiments of the disclosure may be integrated into one processing unit, or may be implemented as separate physical units. One or more units may be integrated into one unit. The above integrated unit may be implemented in hardware, or may be implemented as a software functional unit.

When being implemented as a software functional unit and being sold and used as a separate product, the integrated unit may be stored in a computer readable storage medium. Based on this, essential part or a part contributing to the prior art of the technical solution of the disclosure or the whole or part of the technical solution may be embodied as a software product which is stored in a storage medium, including several instructions for causing a computer device (which may be a personal computer, a server, a network device or the like) to perform all or some of the steps of the method in the embodiment of the disclosure. The storage medium includes various mediums capable of storing program code, such as a U disk, a movable disk, a Read-Only Memory (ROM), a Random Access Memory (RAM), a magnetic disk or an optical disk.

As described above, the above embodiments are only intended to describe the technical solutions of the disclosure, but not to limit the scope of the disclosure. Although the disclosure is described in detail with reference to the above embodiments, it should be understood by those skilled in the art that modifications can be made to the technical solutions in the above embodiments or equivalents can be made to some or all of the technical features thereof. Those modifications and equivalents will not make the corresponding technical solutions deviate from the scope of the technical solutions of the embodiments of the disclosure.

**Claims**

**1.** A noise suppressing method, comprising:

S1, receiving, by a noise suppressing device, internal noise acquired by a reference voice acquisition mechanism and a voice signal containing external noise acquired by a primary voice acquisition mechanism, when the voice signal is inputted;
S2, extracting an internal signal feature corresponding to the internal noise, wherein the internal signal feature is a power spectrum frame sequence; the method being **characterised by** further comprising:
S3, acquiring an external approximate feature corresponding to the external noise based on the internal signal feature and a pre-set mapping formula, wherein the external approximate feature is a sequence of frames in a power spectrum form;
S4, converting the external approximate feature into a noise signal estimate by the inverse Fourier transform; and
S5, performing a pre-set noise cancellation process on the noise signal estimate and the acquired voice signal containing the external noise, to obtain a noise-suppressed de-noised voice signal.

**2.** The noise suppressing method according to claim 1, wherein before step S1, the method further comprises:

training, under a condition that no voice signal is inputted, a preset auto-encoding neural network structure with noise signal samples composed of the internal noise and the external noise, to determine the mapping formula.

**3.** The noise suppressing method according to claim 2, wherein training the auto-encoding neural network structure comprises:

S6, performing the Fourier transform on each pre-set frame of each of noise signal samples, to obtain a feature and sample angle information of the sample frame, wherein the feature of the sample frame is in a power spectral form;

S7, determining a training sample $\operatorname{set}\left(x(n),o(n)\right)_{n=1}^{M}$ by taking the feature of the sample frame as a sample input $x(n)$ and an expected output $o(n)$ of the preset auto-encoding neural network structure;

S8, performing the training with each training sample in the training sample $\operatorname{set}\left(x(n),o(n)\right)_{n=1}^{M}$, to determine a weight vector and an offset parameter corresponding to the training sample $\operatorname{set}\left(x(n),o(n)\right)_{n=1}^{M}$; and

S9, adding the determined weight vector and the determined offset parameter into the preset auto-encoding neural network structure, to obtain the mapping formula of the training sample $\operatorname{set}\left(x(n),o(n)\right)_{n=1}^{M}$.

4. The noise suppressing method according to any one of claims 1 to 3, wherein step S5 comprises:

performing an ANC noise cancellation process on the noise signal estimate and the acquired voice signal containing the external noise, to obtain the noise-suppressed de-noised voice signal.

5. The noise suppressing method according to claim 2 or claim 3, wherein the preset auto-encoding neural network structure is a 5-layer structure, a first layer and a fifth layer are input and output layers, and a second layer, a third layer and a fourth layer are hidden layers.

6. A noise suppressing device, comprises:

a receiving unit (402), configured to receive internal noise acquired by a reference voice acquisition mechanism and a voice signal containing external noise acquired by a primary voice acquisition mechanism, when the voice signal is inputted;
an extracting unit (403), configured to extract an internal signal feature corresponding to the internal noise, wherein the internal signal feature is a power spectrum frame sequence: the device being **characterised in that** it further comprises:
an acquiring unit (404), configured to acquire an external approximate feature corresponding to the external noise based on the internal signal feature and a pre-set mapping formula, wherein the external approximate feature is a sequence of frames in a power spectrum form;
a converting unit (405), configured to convert the external approximate feature into a noise signal estimate by the inverse Fourier transform; and
a de-noising unit (406), configured to perform a pre-set noise cancellation process on the noise signal estimate and the acquired voice signal containing the external noise, to obtain a noise-suppressed de-noised voice signal.

7. The noise suppressing device according to claim 6, wherein the noise suppressing device further comprises:

a training unit (401), configured to train, under a condition that no voice signal is inputted, a preset auto-encoding neural network structure with noise signal samples composed of the internal noise and the external noise, to determine the mapping formula.

8. The noise suppressing device according to claim 7, wherein the training unit comprises:

a converting subunit (4011), configured to perform, under a condition that no voice signal is inputted, the Fourier transform on each pre-set frame of each of noise signal samples, to obtain a feature and sample angle information of the sample frame, wherein the feature of the sample frame is in a power spectral form;
a first determining subunit (4012), configured to determine a training sample $\operatorname{set}\left(x(n),o(n)\right)_{n=1}^{M}$ by taking the feature of the sample frame as a sample input $x(n)$ and an expected output $o(n)$ of the preset auto-encoding neural network structure;
a second determining subunit (4013), configured to perform the training with each training sample in the training sample $\operatorname{set}\left(x(n),o(n)\right)_{n=1}^{M}$, to determine a weight vector and an offset parameter corresponding to the training sample $\operatorname{set}\left(x(n),o(n)\right)_{n=1}^{M}$; and
a calculating subunit (4014), configured to add the determined weight vector and the determined offset parameter into the preset auto-encoding neural network structure, to obtain the mapping formula of the training sample $\operatorname{set}\left(x(n),o(n)\right)_{n=1}^{M}$.

9. A noise suppressing system, comprising:

a reference voice acquisition mechanism (51), a primary voice acquisition mechanism (52), and the noise suppressing device (53) according to any one of claims 6 to 8; wherein

the reference voice acquisition mechanism and the primary voice acquisition mechanism are in signal transmission connection with the noise suppressing device;

the reference voice acquisition mechanism is configured to acquire an internal noise signal; the noise suppressing device is configured to receive internal noise and a voice signal containing external noise when the voice signal is inputted, extract an internal signal feature corresponding to the internal noise, acquire an external approximate feature corresponding to the external noise based on the internal signal feature and a pre-set mapping formula, convert the external approximate feature into a noise signal estimate by the inverse Fourier transform, and perform a pre-set noise cancellation process on the noise signal estimate and the acquired voice signal containing the external noise, to obtain a noise-suppressed de-noised voice signal;

the primary voice acquisition mechanism is configured to acquire the voice signal containing the external noise; and

the internal signal feature is a power spectrum frame sequence, and the external approximate feature is a sequence of frames in a power spectrum form.

10. The noise suppressing system according to claim 9, wherein

the primary voice acquisition mechanism is further configured to acquire the external noise under a condition that no voice signal is inputted, wherein the noise suppressing device trains, under a condition that no voice signal is inputted, a preset auto-encoding neural network structure with noise signal samples composed of the internal noise and the external noise, to determine the mapping formula.

**Patentansprüche**

1. Rauschunterdrückungsverfahren, umfassend:

S1, Empfangen, durch eine Rauschunterdrückungsvorrichtung, von Innenrauschen, das von einem Referenzspracherfassungsmechanismus erfasst wurde, und eines Sprachsignals, das Außenrauschen enthält, das von einem primären Spracherfassungsmechanismus erfasst wurde, wenn das Sprachsignal eingegeben wird;

S2, Extrahieren eines internen Signalmerkmals, das dem internen Rauschen entspricht, wobei das interne Signalmerkmal eine Leistungsspektrumframesequenz ist, wobei das Verfahren **dadurch gekennzeichnet ist, dass** es ferner umfasst:

S3, Erfassen eines externen Näherungsmerkmals, dass dem externen Rauschen entspricht, basierend auf dem internen Signalmerkmal und einer voreingestellten Abbildungsformel, wobei das externe Näherungsmerkmal eine Folge von Einzelbildern in einer Leistungsspektrumforrn ist;

S4, Umwandeln des externen Näherungsmerkmals in eine Rauschsignalschätzung durch die inverse Fourier-Transformation; und

S5, Durchführen eines voreingestellten Rauschunterdrückungsprozesses an der Rauschsignalschätzung und dem erfassten Sprachsignal, dass das Außenrauschen enthält, um ein rauschunterdrücktes, entrauschtes Sprachsignal zu erhalten.

2. Rauschunterdrückungsverfahren nach Anspruch 1, wobei das Verfahren vor Schritt S1 ferner umfasst:

Trainieren, unter der Bedingung, dass kein Sprachsignal eingegeben wird, eine voreingestellte automatisch kodierende neuronale Netzwerkstruktur mit Rauschsignalproben, die sich aus dem internen Rauschen und dem externen Rauschen zusammensetzen, um die Abbildungsformel zu bestimmen.

3. Rauschunterdrückungsverfahren nach Anspruch 2, wobei das Trainieren der automatisch kodierenden neuronalen Netzwerkstruktur umfasst:

S6, Durchführen der Fourier-Transformation an jedem voreingestellten Frame von jedem der Rauschsignalproben, um eine Merkmals- und Probeninformation des Probenframes zu erhalten, worin die Eigenschaft des Probenframes in einer Leistungsspektralform vorliegt;

S7, Bestimmen eines Trainingsprobensatzes, $\left(x(n), o(n)\right)_{n=1}^{M}$ durch Verwendung des Merkmals des Probenframes als Probeneingang $x(n)$ und erwartete Ausgabe $o(n)$ der voreingestellten automatisch kodierenden neuronalen Netzwerkstruktur;

S8, Durchführen des Trainierens mit jeder Trainingsprobe im Trainingsprobensatz $\left(x(n), o(n)\right)_{n=1}^{M} 1$, um einen Gewichtsvektor und einen Offsetparameter zu bestimmen, die dem Trainingsprobensatz $\left(x(n), o(n)\right)_{n=1}^{M}$ entsprechen; und

S9, Hinzufügen des ermittelten Gewichtsvektors und des bestimmten Offsetparameters in die voreingestellte automatisch kodierende neuronale Netzwerkstruktur, um die Abbildungsformel des Trainingsprobensatzes $(x(n), o(n))_{n=1}^{M}$ zu erhalten.

4. Rauschunterdrückungsverfahren nach einem der Ansprüche 1 bis 3, worin Schritt S5 umfasst:

   Durchführen eines ANC-Rauschunterdrückungsprozesses an der Rauschsignalschätzung und dem erfassten Sprachsignal, dass das Außenrauschen enthält, um das rauschunterdrückte, entrauschte Sprachsignal zu erhalten.

5. Rauschunterdrückungsverfahren nach Anspruch 2 oder Anspruch 3, wobei die voreingestellte automatisch kodierende neuronale Netzwerkstruktur eine 5-SchichtStruktur ist, eine erste Schicht und eine fünfte Schicht sind Ein- und Ausgabeschichten und eine zweite Schicht, eine dritte Schicht und eine vierte Schicht sind versteckte Schichten.

6. Rauschunterdrückungsvorrichtung, umfassend:

   eine Empfangseinheit (402), die konfiguriert ist, um internes Rauschen zu empfangen, das von einem Referenzspracherfassungsmechanismus erfasst wird, und ein Sprachsignal, das externes Rauschen enthält, das von einem primären Spracherfassungsmechanismus erfasst wird, wenn das Sprachsignal eingegeben wird;
   eine Extraktionseinheit (403), die konfiguriert ist, um ein internes Signalmerkmal zu extrahieren, dass dem internen Rauschen entspricht, wobei das interne Signalmerkmal eine Leistungsspektrumframesequenz ist;
   eine Erfassungseinheit (404), die konfiguriert ist, um ein externes Näherungsmerkmal zu erfassen, das dem externen Rauschen entspricht, basierend auf dem internen Signalmerkmal und einer voreingestellten Abbildungsformel, wobei das externe Näherungsmerkmal eine Sequenz von Frames in einer Leistungsspektrumform ist;
   eine Umwandlungseinheit (405), die konfiguriert ist, um das externe Näherungsmerkmal in eine Rauschsignalschätzung durch die inverse Fourier-Transformation umzuwandeln; und
   eine Entrauschungseinheit (406), die konfiguriert ist, um einen voreingestellten Rauschunterdrückungsprozess an der Rauschsignalschätzung und dem erfassten Sprachsignal, dass das Außenrauschen enthält, durchzuführen, um ein rauschunterdrücktes, entrauschtes Sprachsignal zu erhalten.

7. Rauschunterdrückungsvorrichtung nach Anspruch 6, wobei die Rauschunterdrückungsvorrichtung ferner umfasst:

   eine Trainingseinheit (401), die konfiguriert ist, um unter einer Bedingung, dass kein Sprachsignal eingegeben wird, eine voreingestellte automatisch kodierende neuronale Netzwerkstruktur mit Rauschsignalproben, die aus dem internen Rauschen und dem externen Rauschen zusammengesetzt sind, zu trainieren, um die Abbildungsformel zu bestimmen.

8. Rauschunterdrückungsvorrichtung nach Anspruch 7, wobei die Trainingseinheit umfasst:

   eine Umwandlungs-Untereinheit (4011), die konfiguriert ist, um unter einer Bedingung, dass kein Sprachsignal eingegeben wird, die Fourier-Transformation auf jeden voreingestellten Frame von jeder der Rauschsignalproben durchzuführen, um ein Merkmal und Probenwinkelinformationen des Probenframes zu erhalten, wobei das Merkmal des Probenframes in einer leistungsspektralen Form vorliegt;
   eine erste bestimmende Untereinheit (4012), die konfiguriert ist, um einen Trainingsprobensatz $(x(n), o(n))_{n=1}^{M}$ zu bestimmen indem sie das Merkmal des Probenframes als Probeneingang $x(n)$ und einen erwarteten Ausgang $o(n)$ der voreingestellten automatisch kodierenden neuronalen Netzwerkstruktur nimmt;
   eine zweite bestimmende Untereinheit (4013), die konfiguriert ist, um das Training mit jeder Trainingsprobe in dem Trainingsprobensatz $(x(n), o(n))_{n=1}^{M}$ durchzuführen, um einen Gewichtsvektor und einen Offsetparameter zu bestimmen, die dem Trainingsprobensatz $(x(n), o(n))_{n=1}^{M}$ entsprechen; und
   eine Rechenuntereinheit (4014), die konfiguriert ist, um den bestimmten Gewichtsvektor und den bestimmten Offsetparameter in die voreingestellte automatisch kodierende neuronale Netzwerkstruktur einzufügen, um die Abbildungsformel des Trainingsprobensatzes $(x(n), o(n))_{n=1}^{M}$ zu erhalten.

9. Rauschunterdrückungssystem, umfassend:

   einen Referenzspracherfassungsmechanismus (51),
   einen primären Spracherfassungsmechanismus (52) und

eine Rauschunterdrückungsvorrichtung (53) nach einem der Ansprüche 6 bis 8; wobei der referenzierte Spracherfassungsmechanismus und der primäre Spracherfassungsmechanismus in Signalübertragungsverbindung mit der Rauschunterdrückungsvorrichtung stehen;

der Referenzspracherfassungsmechanismus konfiguriert ist, um ein internes Rauschsignal zu erfassen;

die Rauschunterdrückungsvorrichtung konfiguriert ist, um internes Rauschen und ein Sprachsignal, das externes Rauschen enthält, zu empfangen, wenn das Sprachsignal eingegeben wird, ein internes Signalmerkmal, dass dem internen Rauschen entspricht, zu extrahieren, ein externes Näherungsmerkmal, dass dem externen Rauschen entspricht, zu erfassen, basierend auf dem internen Signalmerkmal und einer voreingestellten Abbildungsformel, das externe Näherungsmerkmal in eine Rauschsignalschätzung durch die inverse Fourier-Transformation umzuwandeln und einen voreingestellten Rauschunterdrückungsprozess an der Rauschsignalschätzung und dem das externe Rauschen enthaltenden Sprachsignal durchzuführen, um ein rauschunterdrücktes, entrauschtes Sprachsignal zu erhalten;

der primäre Spracherfassungsmechanismus ist konfiguriert, um das Sprachsignal zu erfassen, welches das Außenrauschen enthält; und

das interne Signalmerkmal ist eine Leistungsspektrumframesequenz ist, und das externe Näherungsmerkmal ist eine Sequenz von Frames in einer Leistungsspektrumform.

10. Rauschunterdrückungssystem nach Anspruch 9, wobei der primäre Spracherfassungsmechanismus ferner konfiguriert ist, das externe Rauschen unter der Bedingung zu erfassen, dass kein Sprachsignal eingegeben wird, wobei die rauschunterdrückende Vorrichtung unter der Bedingung trainiert, dass kein Sprachsignal eingegeben wird, eine voreingestellte automatisch kodierende neuronale Netzwerkstruktur mit Rauschsignalproben, die aus dem internen Rauschen und dem externen Rauschen bestehen, um die Abbildungsformel zu bestimmen.

## Revendications

1. Un procédé de suppression de bruit, comprenant :

S1, le fait de recevoir, par un dispositif de suppression de bruit, un bruit interne acquis par un mécanisme d'acquisition vocale de référence et un signal vocal contenant un bruit externe acquis par un mécanisme d'acquisition vocale principal, lorsque le signal vocal est entré ;

S2, le fait d'extraire une caractéristique de signal interne correspondant au bruit interne, la caractéristique de signal interne étant une séquence de trames de spectre de puissance, le procédé étant **caractérisé en ce qu'**il comprend en outre :

S3, le fait d'acquérir une caractéristique d'approximation externe correspondant au bruit externe sur la base de la caractéristique de signal interne et d'une formule de mappage prédéfinie, la caractéristique d'approximation externe étant une séquence de trames sous une forme de spectre de puissance ;

S4, le fait de convertir la caractéristique d'approximation externe en une estimation du signal de bruit par la transformée de Fourier inverse ; et

S5, le fait d'exécuter un processus d'annulation de bruit préréglé sur l'estimation du signal de bruit et sur le signal vocal acquis contenant le bruit externe, pour obtenir un signal vocal dépourvu de bruit.

2. Le procédé de suppression du bruit selon la revendication 1, dans lequel, avant l'étape S1, le procédé comprend en outre :

le fait de faire l'apprentissage, à condition qu'aucun signal vocal ne soit entré, d'une structure de réseau neuronal à auto-codage prédéfini au moyen d'échantillons de signaux de bruit composés du bruit interne et du bruit externe, pour déterminer la formule de mappage.

3. Le procédé de suppression de bruit selon la revendication 2, dans lequel le fait de faire l'apprentissage de la structure de réseau neuronal à auto-encodage comprend :

S6, le fait d"exécuter la transformée de Fourier sur chaque trame prédéterminée de chacun des échantillons de signal de bruit, pour obtenir une information de caractéristique et d'angle d'échantillonnage de la trame d'échantillonnage, la caractéristique de la trame d'échantillonnage étant sous une forme spectrale de puissance ;

S7, le fait de déterminer un ensemble d'échantillons d'apprentissage $(x(n), o(n))_{n=1}^{M}$ en prenant la caractéristique de la trame d'échantillonnage comme entrée d'échantillon $x(n)$ et une sortie attendue $o(n)$ de la structure de réseau neuronal à auto-codage prédéfini ;

S8, le fait d'effectuer l'apprentissage avec chaque échantillon d'entraînement dans l'ensemble d'échantillons d'entraînement $(x(n), o(n))_{n=1}^{M}$, pour déterminer un vecteur de poids et un paramètre de décalage correspondant à l'ensemble d'échantillons d'entraînement $(x(n), o(n))_{n=1}^{M}$ ; et

S9, le fait d'ajouter le vecteur de poids déterminé et le paramètre de décalage déterminé dans la structure de réseau neuronal à auto-encodage prédéfini, pour obtenir la formule de mappage de l'ensemble d'échantillons d'apprentissage $(x(n), o(n))_{n=1}^{M}$.

4. Le procédé de suppression du bruit selon l'une quelconque des revendications 1 à 3, dans lequel l'étape S5 comprend :

le fait de mettre en oeuvre un processus d'annulation de bruit ANC sur l'estimation du signal de bruit et le signal vocal acquis contenant le bruit externe, pour obtenir le signal vocal dépourvu de bruit.

5. Le procédé de suppression de bruit selon la revendication 2 ou la revendication 3, dans lequel la structure de réseau neuronal à auto-encodage prédéfini est une structure à 5 couches, une première couche et une cinquième couche sont des couches d'entrée et de sortie, et une deuxième couche, une troisième couche et une quatrième couche sont des couches masquées.

6. Un dispositif de suppression de bruit, comprenant :

une unité de réception (402), configurée pour recevoir un bruit interne acquis par un mécanisme d'acquisition vocale de référence et un signal vocal contenant un bruit externe acquis par un mécanisme d'acquisition vocale principal, lorsque le signal vocal est entré ;
une unité d'extraction (403), configurée pour extraire une caractéristique de signal interne correspondant au bruit interne, la caractéristique de signal interne étant une séquence de trame de spectre de puissance, le dispositif étant **caractérisé en ce qu'**il comprend en outre :

une unité d'acquisition (404), configurée pour acquérir une caractéristique d'approximation externe correspondant au bruit externe sur la base de la caractéristique de signal interne et d'une formule de mappage prédéfinie, la caractéristique d'approximation externe étant une séquence de trames sous une forme de spectre de puissance ;
une unité de conversion (405), configurée pour convertir la caractéristique approximative externe en un signal de bruit estimé par la transformée de Fourier inverse ; et
une unité de suppression de bruit (406), configurée pour effectuer un processus de suppression de bruit préréglé sur l'estimation du signal de bruit et le signal vocal acquis contenant le bruit externe, afin d'obtenir un signal vocal dépourvu de bruit.

7. Le dispositif de suppression de bruit selon la revendication 6, dans lequel le dispositif de suppression de bruit comprend en outre :

une unité d'apprentissage (401), configurée pour faire l'apprentissage, sous une condition qu'aucun signal vocal ne soit entré, une structure de réseau neuronal à auto-encodage prédéfini au moyen d'échantillons de signaux de bruit composés du bruit interne et du bruit externe, pour déterminer la formule de mappage.

8. Le dispositif de suppression de bruit selon la revendication 7, dans lequel l'unité d'apprentissage comprend :

une sous-unité de conversion (4011), configurée pour exécuter, à une condition qu'aucun signal vocal ne soit entré, la transformée de Fourier sur chaque trame prédéterminée de chacun des échantillons de signal de bruit, pour obtenir une information de caractéristique et d'angle d'échantillonnage de la trame d'échantillonnage, la caractéristique de la trame d'échantillonnage étant sous une forme de spectre de puissance ;
une première sous-unité de détermination (4012), configurée pour déterminer un ensemble d'échantillons d'apprentissage $(x(n), o(n))_{n=1}^{M}$ en prenant la caractéristique de la trame d'échantillonnage comme une entrée d'échantillon $x(n)$ et une sortie prévue $o(n)$ de la structure de réseau neuronal à auto-encodage prédéfini ;
une deuxième sous-unité de détermination (4013), configurée pour effectuer l'apprentissage au moyen de chaque échantillon d'apprentissage dans l'ensemble d'échantillons d'apprentissage $(x(n), o(n))_{n=1}^{M}$, pour déterminer un vecteur poids et un paramètre de décalage correspondant à l'ensemble d'échantillons d'apprentissage $(x(n), o(n))_{n=1}^{M}$ ; et
une sous-unité de calcul (4014), configurée pour ajouter le vecteur de poids déterminé et le paramètre de décalage déterminé dans la structure de réseau neuronal à auto-encodage prédéfini, afin d'obtenir la formule de mappage de l'ensemble d'échantillons de formation $(x(n), o(n))_{n=1}^M$

9. Un système de suppression de bruit, comprenant :

un mécanisme d'acquisition vocale de référence (51), un mécanisme d'acquisition vocale principal (52), et le dispositif de suppression de bruit (53) selon l'une quelconque des revendications 6 à 8 ;

le mécanisme d'acquisition vocale de référence et le mécanisme d'acquisition vocale principal étant en connexion de transmission de signal avec le dispositif de suppression de bruit ;

le mécanisme d'acquisition vocale de référence étant configuré pour acquérir un signal de bruit interne ;

le dispositif de suppression de bruit étant configuré pour recevoir un bruit interne et un signal vocal contenant un bruit externe lorsque le signal vocal est entré, pour extraire une caractéristique de signal interne correspondant au bruit interne, pour acquérir une caractéristique d'approximation externe correspondant au bruit externe sur la base de la caractéristique de signal interne et d'une formule de mappage prédéfinie, pour convertir la caractéristique d'approximation externe en un signal de bruit estimé par transformation de Fourier inverse, et pour effectuer un processus prédéterminé de suppression de bruit sur l'estimation de signal de bruit et le signal vocal acquis contenant le bruit externe, afin d'obtenir un signal vocal dépourvu de bruit ;

le mécanisme principal d'acquisition vocal est configuré pour acquérir le signal vocal contenant le bruit externe ; et

la caractéristique de signal interne est une séquence de trames de spectre de puissance, et la caractéristique d'approximation externe est une séquence de trames sous forme de spectre de puissance.

10. Le système de suppression de bruit selon la revendication 9, dans lequel le mécanisme d'acquisition vocale principal est en outre configuré pour acquérir le bruit externe dans une condition qu'aucun signal vocal ne soit entré, le dispositif de suppression de bruit faisant l'apprentissage, à une condition qu'aucun signal vocal ne soit entré, d'une structure de réseau neuronal à auto-encodage prédéfini au moyen d'échantillons de signaux sonores composés du bruit interne et du bruit externe, pour déterminer la formule de mappage.

A noise suppressing device receives internal noise acquired by a reference voice acquisition mechanism and a voice signal containing external noise acquired by a primary voice acquisition mechanism, when the voice signal is inputted — S1

Extract an internal signal feature corresponding to internal noise — S2

Acquire an external approximate feature corresponding to the external noise based on the internal signal feature and a pre-set mapping formula — S3

Convert the external approximate feature into a noise signal estimate by the inverse Fourier transform — S4

Perform a pre-set noise cancellation process on the noise signal estimate and the acquired voice signal containing the internal noise, to obtain a noise-suppressed de-noised voice signal — S5

**Figure 1**

Perform, under a condition that no voice signal is inputted, the Fourier transform on each pre-set frame of each of the noise signal samples, to obtain a feature of a corresponding sample frame and sample angle information of the sample frame ⟋ 201

↓

Determine a training sample set by taking the feature of the sample frame as a sample input and an expected output of the preset selfauto-encoding neural network structure ⟋ 202

↓

Perform the training with each training sample in the training sample set, to determine a weight vector and an offset parameter corresponding to the training sample set ⟋ 203

↓

Add the determined weight vector and the determined offset parameter with into the preset selfauto-encoding neural network structure, to obtain the mapping formula of the training sample set ⟋ 204

↓

A noise suppressing device receives internal noise acquired by a reference voice acquisition mechanism and a voice signal containing external noise acquired by a primary voice acquisition mechanism, when the voice signal is inputted ⟋ 205

↓

Extract an internal signal feature corresponding to internal noise ⟋ 206

↓

Acquire an external approximate feature corresponding to the external noise based on the internal signal feature and a pre-set mapping formula ⟋ 207

↓

Convert the external approximate feature into a noise signal estimate by the inverse Fourier transform ⟋ 208

↓

Perform an ANC noise cancellation process on the noise signal estimate and the acquired voice signal containing the internal noise, to obtain a noise-suppressed de-noised voice signal ⟋ 209

**Figure 2**

**Figure 3**

**Figure 4**

401 — Training unit

4011 — Converting subunit

4012 — First determining subunit

4013 — Second determining subunit

4014 — Calculating subunit

402 — Receiving unit

403 — Extracting unit

404 — Acquiring unit

406 — De-noising unit

405 — Converting unit

**Figure 5**

51 — Reference voice acquisition mechanism

52 — Primary voice acquisition mechanism

53 — Noise suppressing device

Output layer, 1280 nodes

Hidden layer, 1024 nodes

Hidden layer, 1024 nodes

Hidden layer, 1024 nodes

Input layer, 1280 nodes

**Figure 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510312269

- US 20130132076 A1

**Non-patent literature cited in the description**

- **S.GODSILL ; H. BUCHNER ; J. SKOGLUND.** DETECTION AND SUPPRESSION OF KEYBOARD TRANSIENT NOISE IN AUDIO STREAMS WITH AUXILIARY KEYBED MICROPHONE. *proceedings of ICASSP,* 2015, 379-383